# EUROPÄISCHE PATENTSCHRIFT

(11) **EP 3 420 609 B1**
(45) Veröffentlichungstag und Bekanntmachung des Hinweises auf die Patenterteilung: **25.12.2019**
(21) Anmeldenummer: 17705903.7
(22) Anmeldetag: 20.02.2017
(51) Int. Cl.: H01M 8/18, H01M 8/20, H01M 8/24, H01M 8/0273, H01M 8/2404, H01M 8/248

(54) **ABSTANDSHALTER FÜR ZELLSTACK**
SPACER FOR A CELL STACK
ÉCARTEUR POUR EMPILEMENT D'ÉLÉMENTS DE BATTERIE

(30) Priorität: 24.02.2016 AT 501312016
(43) Veröffentlichungstag der Anmeldung: 02.01.2019
(73) Patentinhaber: Enerox GmbH, 2355 Wiener Neudorf (AT)
(72) Erfinder: WHITEHEAD, Adam Harding, 7000 Eisenstadt (AT); HARRER, Martin, 1040 Wien (AT)
(74) Vertreter: Patentanwälte Pinter & Weiss OG
(86) Internationale Anmeldenummer: PCT/EP2017/053801
(87) Internationale Veröffentlichungsnummer: WO 2017/144415

(56) Entgegenhaltungen:
- WO-A1-2012/001446
- AT-A4- 501 902
- AT-B1- 513 834
- CN-B- 102 306 821

## Beschreibung

Die gegenständliche Erfindung betrifft einen Zellstack einer Redox-Durchflussbatterie bestehend aus einer ersten Endplatte und einer zweiten Endplatte, wobei der Zellstack eine Anzahl an Stackseiten aufweist und zwischen der ersten Endplatte und der zweiten Endplatte eine Mehrzahl von Zellen angeordnet sind, wobei die Zellen jeweils aus zwei elastomere Stackrahmen mit einer Anzahl an Rahmenseitenflächen an einer Anzahl an Rahmenseiten, die gemeinsam jeweils eine Umfangsfläche eines Stackrahmens bilden, bestehen, wobei Spannmitteln vorhanden sind, die die erste Endplatte und die zweite Endplatte zusammendrücken und zwischen der ersten Endplatte und zweiten Endplatte zumindest ein Abstandshalter angeordnet ist, um einen Abstand zwischen der ersten Endplatte und der zweiten Endplatte einzustellen. Redox-Durchflussbatterien bestehen bekanntermaßen aus Zellen, die von Elektrolyten mit unterschiedlichen Redox-Potentialen durchströmt werden. Die Zellen umfassen dabei jeweils zwei aneinander gereihte Stackrahmen, in denen jeweils eine Elektrode angeordnet ist, die durch eine semipermeable Membran, typischerweise eine Ion-Austauschmembran, getrennt sind. Ein Rahmen mit Elektrode wird auch als Halbzelle bezeichnet. Zwischen einzelnen Zellen der Redox-Durchflussbatterie ist eine bipolare Platte angeordnet. Die aneinander gereihten Zellen werden auch als Zellstack bezeichnet. In den Endrahmen an den axialen Enden des Zellstacks der Redox-Durchflussbatterie ist jedoch keine derartige Elektrode angeordnet, sondern ein elektrisch leitender, typischerweise ein metallischer, Stromabnehmer, der mit einem nach außen geführten elektrischen Anschluss der Redox-Durchflussbatterie verbunden ist. Die einzelnen Rahmen der Redox-Durchflussbatterie müssen gegeneinander abgedichtet sein, um einerseits zu verhindern, dass Elektrolyt nach außen dringt (externe Abdichtung) und andererseits, um zu verhindern, dass sich die unterschiedlich geladenen Elektrolyten vermischen (interne Abdichtung). Letzteres würde insbesondere einen Wirkungsgradverlust bedeuten. Problematisch sind aber vor Allem Leckagen im Bereich des Stromabnehmers, da ein Elektrolyt am Stromabnehmer unweigerlich Korrosion verursachen würde, was nach einer gewissen Zeit den Totalausfall der Redox-Durchflussbatterie nach sich ziehen würde. Ein Kontakt zwischen Elektrolyt und metallischem Stromabnehmer ist daher zu unterbinden.

Um eine sichere Abdichtung eines Zellstacks zu gewährleisten sind verschiedene Ansätze bekannt. Einerseits werden starre, nicht elastische Rahmen verwendet, zwischen denen zur Abdichtung separate Dichtelemente angeordnet werden. Andererseits sind auch, Rahmen aus elastischen Kunststoffen (Elastomere) bekannt.

Nicht elastische Kunststoffe, typischerweise thermoplastische Kunststoffe, sind steif und nur innerhalb eines gewissen Temperaturbereichs formbar. Elastomere sind formfeste, aber Nicht elastische Kunststoffe, typischerweise thermoplastische Kunststoffe, sind steif und nur innerhalb eines gewissen Temperaturbereichs formbar. Elastomere sind formfeste, aber elastisch verformbare Kunststoffe, d.h., dass ein Elastomer nach Deformation idealerweise wieder in seine ursprüngliche Ausgangsform zurückkehrt. Thermoplastische Kunststoffe reagieren empfindlich auf Kratzer und Beschädigungen, was schnell zum Nachlassen der Dichtwirkung führen kann. Um eine bessere innere und vor Allem externe Abdichtung zu erreichen sind Elastomere zu bevorzugen. Dabei werden die Eigenschaften des elastomeren Materials ausgenutzt, indem die Stirnflächen der einzelnen Stackrahmen aneinander gepresst werden. Damit wird die Dichtung durch die aneinander liegenden Stirnflächen selbst bewirkt und es werden keine weiteren Dichtelemente benötigt. Weiters ist ein solcher elastomerer Stackrahmen unempfindlicher gegen Beschädigungen der Oberfläche.

Die AT 513834 B1 zeigt den Aufbau einer Redox-Durchflussbatterie aus elastomeren Endrahmen und dazwischen befindlichen Stackrahmen, die durch Spannmittel zusammengepresst werden. Da die Stackrahmen elastomer ausgeführt sind, ist es erforderlich den Abstand der Endrahmen durch (nicht elastomere) Abstandshalter einzustellen. Um die Abdichtung zwischen einem elastomeren Endrahmen und dem benachbarten Stackrahmen zu verbessern ist ein in Umfangsrichtung geschlossenes Dichtelement an einer ersten Stirnfläche des Endrahmens angeformt. Da durch die Verwendung von Spannmitteln, die beispielsweise als Bolzen ausgeführt sind, die Stackrahmen aneinandergepresst werden, werden die Stackrahmen gegebenenfalls nach außen gequetscht. Ebenso kann es unter dem Druck, der durch die Spannmittel erzeugt wird, zu einem Kriechen des Materials der Stackrahmen kommen, was in weiterer Folge zu einer Beeinträchtigung der äußeren und/oder inneren Dichtheit führen kann, letzteres insbesondere sobald vorhandene Dichtelemente die Verformung nicht mehr kompensieren können.

Es ist somit die Aufgabe der gegenständlichen Erfindung, die Dichtheit von Redox-Durchflussbatterien mit aneinandergepressten elastomeren Strackrahmen sicherzustellen.

Diese Aufgabe wird gelöst, indem zumindest ein Abstandshalter auf zumindest einer Stackseite an mindestens 75%, vorzugsweise 90%, der Stackseitenflächen dieser zumindest einen Stackseite bündig anliegt. Durch diese Berührungsfläche zwischen Stackseitenfläche bzw. Rahmenseitenflächen und Abstandshalter wird verhindert, dass die elastomeren Stackrahmen sich nicht in unerwünschter Weise verformen. Weiters ist beim Zusammenbau eines Zellstacks eine bessere Ausrichtung der einzelnen Stackrahmen möglich. Für das Zusammensetzen des Zellstacks kann eine Schmierung der Abstandshalter vorteilhaft sein, was es den Stackrahmen ermöglicht in die gewünschte Position zu gleiten. Die Abstandshalter können beispielsweise aus Kunststoffen wie Polyvinylchlorid (PVC), Polyethylen (PE), Polypropylen (PP), Polystyrol (PS), Acrylnitril-Butadien-Styrol (ABS), Polyvinylidenfluorid (PVDF), Polytetrafluorethylen (PTFE), Ethylen-Tetrafluorethylen (ETFE), Perfluorethylenpropylen (FEP), Polyethylenterephthalat (PET), etc. gefertigt werden, es wäre auch die Verwendung von Glas möglich. Wichtig ist dabei, dass der thermische Ausdehnungskoeffizient der Abstandshalter an die Stackrahmen angepasst ist und die Abstandshalter idealerweise chemisch resident gegenüber die verwendeten Elektrolyte sind. Der thermische Ausdehnungskoeffizient der Abstandshalter kann auch modifiziert werden, beispielsweise um bessere (mechanische) Eigenschaften zu erreichen oder um den thermischen Ausdehnungskoeffizient an die Stackrahmen anzupassen. Damit würden sich bei einer Temperaturänderung Stackrahmen und Abstandshalter gleichermaßen ausdehnen oder zusammenziehen und es werden temperaturschwankungsbedingte Leckagen verhindert.

Der zumindest eine Abstandshalter kann vorteilhafterweise einen thermischen Ausdehnungskoeffizienten im Bereich von 80 bis 120% eines thermischen Ausdehnungskoeffizienten der Stackrahmen aufweisen.

Vorteilhafterweise liegt der zumindest eine Abstandshalter an jeder Rahmenseitenfläche jedes Stackrahmens zu mindestens 75%, vorzugsweise 90%, bündig an. Somit teilt sich die prozentuelle Berührungsfläche zwischen Stackrahmen und Abstandshalter homogener auf und es kommt zu einer noch gleichmäßigeren Stützung der Stackrahmen durch die Abstandshalter.

Vorteilhafterweise sind die Berührungspunkte von Stackrahmen und des zumindest einen Abstandshalters in Umfangsrichtung der Stackrahmen maximal für 100 mm, vorzugsweise 10 mm durchgehend unterbrochen.

Vorteilhafterweise sind die Berührungspunkte von Stackrahmen und dem zumindest einen Abstandshalter auf einer Stackseite in Umfangsrichtung der Stackrahmen maximal für 75%, vorzugsweise 90%, der Seitenlänge der Stackseite des Stackrahmens durchgehend unterbrochen.

Es ist auch denkbar die Berührungspunkte von Stackrahmen und Abstandshalter, und/oder den Abstandshalter selbst in Längsrichtung des Zellstacks zu unterbrechen. Aufgrund des Drucks, der zwischen den Endplatten in Längsrichtung auf die Abstandshalter erzeugt wird, kann es dabei zu unerwünschten Verformungen kommen.

Vorteilhafterweise sind zumindest zwei Abstandshalter vorgesehen und weisen in Umfangsrichtung der Stackrahmen einen Spalt einer Breite von maximal 2 mm, vorzugsweise 1 mm auf. Damit kann thermischen Veränderungen der Abstandshalter vorgebeugt werden. Vorzugsweise befindet sich der Spalt an den Ecken des Zellstacks.

Es kann natürlich auch ein Abstandshalter Rahmenseiten mehrerer Stackseiten umschließen, es ist auch denkbar, dass ein Abstandshalter hülsenförmig alle Stackseiten umschließt, oder dass jeweils zwei Abstandshalter in einer L-förmigen Ausführung jeweils zwei Stackseiten umschließen, usw.

Ganz besonders vorteilhafterweise liegt der zumindest eine Abstandshalter an jeder Rahmenseite jedes Stackrahmens zu 100% bündig an. Das heißt, dass der zumindest eine Abstandshalter die Stackseiten des Zellstacks komplett umschließt. Bei einem vierseitigen Zellstack liegen also beispielsweise vier Abstandshalter an jeder Rahmenseite jedes Stackrahmen zu 100% bündig an. Natürlich können auch hier Abstandshalter mehrere Stackseiten bedecken, womit also auch weniger als vier Abstandshalter verwendet werden können. Damit wird die größtmögliche Stützung der Stackrahmen durch die Abstandshalter erreicht. Ein Kriechen der Stackrahmen nach außen wird vollständig verhindert, wodurch die äußere Dichtheit des Zellstacks besser gewährleistet wird.

Um den Abstand der Endplatten bestmöglich konstant einzustellen, ist es vorteilhaft zumindest einen Abstandshalter pro Stackseite vorzusehen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Redox-Durchflussbatterie mit einem Zellstack
Fig.2 einen Schnitt durch den Zellstack
Fig.3 einen Schrägriss des Zellstacks
Fig.4 eine Draufsicht auf den Zellstack
Fig.5 einen Schnitt durch den Zellstack parallel zu den Stackrahmen
Fig. 6 einen Abstandshalter

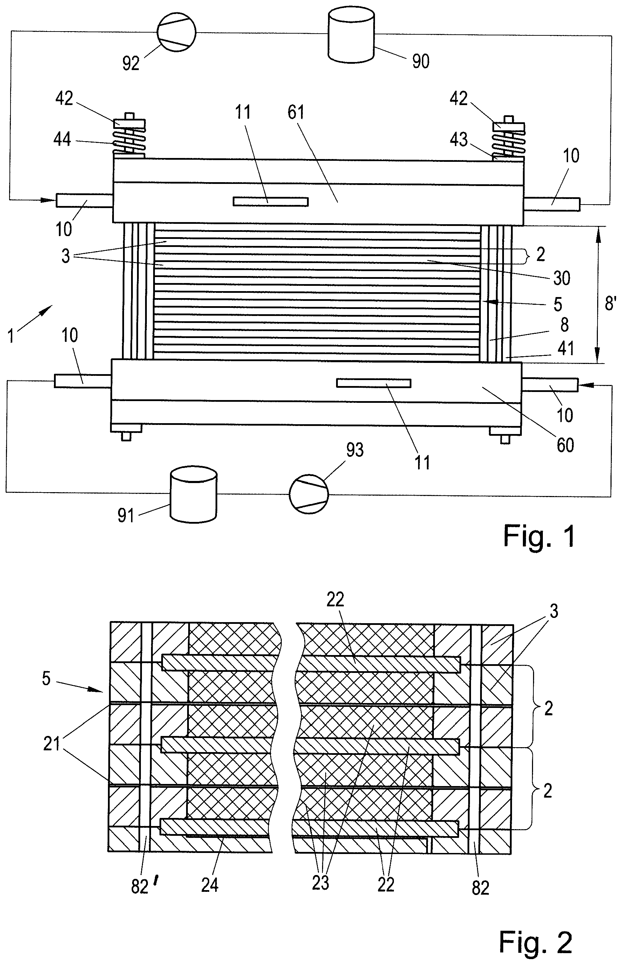

Mit Bezugnahme auf Figs.1 und 2 wird der hinlänglich bekannte Aufbau einer Redox-Durchflussbatterie 1 nach Stand der Technik erläutert. Ein Zellstack 5 einer Redox-Durchflussbatterie 1 umfasst eine Mehrzahl von Zellen 2, die wiederum jeweils aus zwei Stackrahmen 3 gebildet werden. Ein Stackrahmen 3 ist aus einem Elastomer, wie z.B. ein polyolefinisch thermoplastisches Elastomer (TPE oder TPO), wie z.B. Santoprene®, oder ein thermoplastisches Vulkanat (TPV), gefertigt, insbesondere in einem Spritzgießverfahren. Das Rahmenmaterial weist z.B. eine Härte im Bereich von 40 - 95 Shore A, bevorzugt 60 - 75 Shore A, auf. Zwischen zwei Stackrahmen 3 einer Zelle 2 ist jeweils eine semipermeable Membran 21, typischerweise eine Ion-Austauschmembran (Kation- und/oder oder Anion-Austauschmembran, z.B. Nafion®) angeordnet. Zwischen zwei benachbarten Zellen 2 ist eine Elektrodenplatte 22, z.B. eine bipolare Platte, angeordnet, wobei die Elektrodenplatte 22, wie hier gezeigt, in Vertiefungen in den Stackrahmen 3 eingelegt sein kann. Die Stackrahmen 3 haben zentrale, durchgehende Ausnehmungen, in denen jeweils Elektroden 23, z.B. Matten aus Karbon- oder Graphitfasern, angeordnet sind. Über Bohrungen 82, 82' in den Stackrahmen 3 werden elektrisch mittels der Pumpen 92,93 unterschiedlich geladene Elektrolytflüssigkeiten durch die Zellen 2 gepumpt, wobei die Elektroden 23 jeder Halbzelle einer Zelle 2 von einer anderen Elektrolytflüssigkeit durchströmt wird. Die Elektrolytflüssigkeiten können von außen über Elektrolytflüssigkeitsanschlüsse 10 zu- und abgeführt werden und werden dann intern über ein Kanalsystem verteilt, sodass jede Elektrode von der zugehörigen Elektrolytflüssigkeit durchströmt wird. Dadurch kommt es wie hinlänglich bekannt durch elektro-chemische Vorgänge zur Erzeugung von elektrischem Strom bzw. zu einer Aufladung der Redox-Durchflussbatterie 1, oder genauer der Elektrolytflüssigkeiten. Bei einigen Typen von Redox-Durchflussbatterien 1, wie z.B. ein Vanadium-Redox-Durchflussbatterie oder einer Vanadium/Polyhalid-Batterie, sind die beiden Elektrolytflüssigkeiten chemisch weitgehend ähnlich bzw. weisen nur einen anderen Oxidationszustand auf (z.B. V2+ und V3+, VO2+ und VO2+).

Fig.1 zeigt ebenso die Tanks 90,91 einer Zelle 2 einer Redox-Durchflussbatterie 1 als bevorzugtes Beispiel für ein System zur Energieerzeugung bzw. -speicherung auf elektrochemischer Basis. In den Tanks 90,91 befinden sich die unterschiedlich geladenen Elektrolytflüssigkeiten, die zur Energieerzeugung bzw. Energiespeicherung in den Halbzellen und anschließend wieder zurück in die Tanks 90,91 umgewälzt werden. Die Tanks 90,91 können räumlich getrennte Behälter sein, können aber auch, beispielsweise als zwei, durch eine Trennwand abgeteilte Abteile in einem gemeinsamen Behälter gebildet sein. Die positive Elektrolytflüssigkeit kann beispielsweise im geladenen Zustand vier- und fünfwertiges Vanadium, Schwefelsäure und gegebenenfalls weitere Additive enthalten. Die negative Elektrolytflüssigkeit kann beispielsweise im geladenen Zustand zwei- und dreiwertiges Vanadium, Schwefelsäure und gegebenenfalls weitere Additive enthalten.

Die Abdichtung zwischen den Stackrahmen 3 erfolgt über die Stackrahmen 3 selbst. Die Stackrahmen 3 weisen vier Stackseiten 50 mit vier Stackseitenflächen 51 auf. Diese Stackseiten 50 werden aus den aneinander liegenden Rahmenseiten 30 der Stackrahmen 3 gebildet, wobei die Rahmenseitenflächen 31 der Rahmenseiten 30 pro Stackseite 50 die Stackseitenfläche 51 der jeweiligen Stackseite 50 ergeben. Die Summe aller Stackseitenflächen 51 ergibt somit die äußere Umfangsfläche des Zellstacks 5. Da die Stackrahmen 3 aus einem Elastomer gefertigt und folglich elastisch sind, wird bei einem ausreichenden axialen Druck auf die Stackrahmen 3 die Dichtheit zwischen den zusammengedrückten Stackrahmen 3 bzw. Zellen 2 bewirkt. Durch den Druck kann es jedoch auch zu Verformungen der Stackrahmen 3 kommen, was die Dichtheit beeinflussen kann. Der Zellstack 5 wird dazu zwischen einer ersten Endplatte 60 und einer zweiten Endplatte 61 angeordnet, wobei diese starr ausgeführt sind und durch Spannmittel 4, wie z.B. durchreichende Bolzen 41, die mittels Muttern 42, Beilagscheiben 43 und Federn 44 verspannt werden, zusammengepresst werden. Die Endplatten 60,61 können dabei runde Ecken aufweisen, um ein Verletzungsrisiko durch scharfe Kanten zu vermeiden und sorgen auch dafür, dass die Stackrahmen 3 gleichmäßig gepresst werden, also eine ähnliche Dicke aufweisen. An den Endplatten 60,61 ist weiters ein elektrischer Anschluss 11 vorgesehen, über den die Stromabnehmer 24 der Redox-Durchflussbatterie 1 mit einem externen Stromkreis verbunden werden kann. Weiters sind im gezeigten Ausführungsbeispiel an den Endplatten 60,61 die Elektrolytflüssigkeitsanschlüsse 10 für die Zu- und Abführung der Elektrolytflüssigkeiten vorgesehen. Um ein Setzen der elastischen Stackrahmen 3 durch den Anpressdruck zu verhindern, sind zwischen den Endplatten 60,61 Abstandshalter 8 vorgesehen, um einen konstanten Abstand zwischen den Endplatten 60, 61 sicher zu stellen. Diese Abstandshalter 8 sind bislang meist in mehrfacher Ausführung jeweils entlang der Bolzen 41 an den Stackseiten 50 im Abstand von 150 - 250 mm zwischen der ersten Endplatte 60 und der zweiten Endplatte 61 angebracht, um einen konstanten Abstand zwischen der ersten Endplatte 60 und der zweiten Endplatte 61 einzustellen. Dabei weisen die Abstandshalter 8 meist eine Dicke im Bereich von einigen Millimetern auf. Durch den Anpressdruck kann es jedoch auch zu Verformungen der Stackrahmen 3 quer zur Anpressrichtung kommen, was die Dichtheit des Zellstacks 5 beeinflussen kann. Dabei kann der Stackrahmen 3 bzw. eine Stackseite 50 nach außen gequetscht werden und/oder der ganze Stackrahmen 3 bzw. der ganze Zellstack 5 kann seitlich ausweichen.

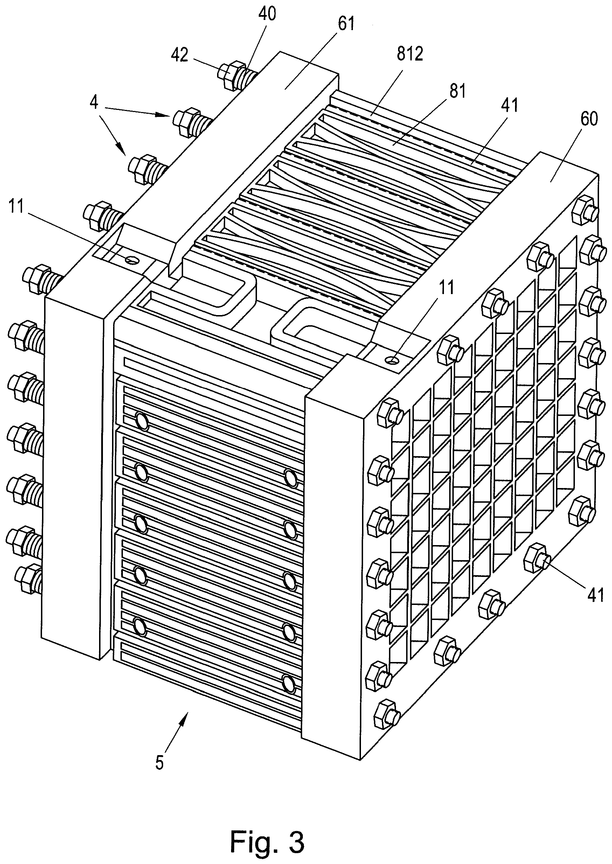

In Fig.3 ist ein erfindungsgemäßer Zellstack 5 dargestellt. Wie erwähnt wird die Umfangsfläche eines Stackrahmens 3 durch eine Anzahl an Rahmenseitenflächen 31 an einer Anzahl an Rahmenseiten 30 des Stackrahmens 3 gebildet. Der Zellstack 5 weist eine Anzahl an Stackseiten 50 auf, deren Oberfläche durch die Rahmenseitenflächen 31 gebildet wird. Um den Umfang des Zellstacks 5 verteilt, beispielsweise an den Ecken des Zellstacks 5 sowie entlang der Stackseiten 50, sind eine Anzahl von Spannmittel 4 angebracht. In Fig.3 sind an den Abstandshaltern 81 Führungsausnehmungen 812 für die Bolzen 41 der Spannmittel 4 vorgesehen. Selbstverständlich können diese Spannmittel 4 auch an anderen Stellen des Zellstacks 5 angebracht sein, beispielsweise können die Spannmittel 4 auch durch die Abstandshalter 81 geführt werden, dass sie vollkommen oder teilweise umschlossen sind. Vorzugsweise sind die Abstandshalter 81 nur durch den Druck der Spannmittel 4 zwischen den Endplatten 60,61 gehalten. Damit ist einerseits ein einfacher Zusammenbau und Abbau des Zellstacks 5 gewährleistet, und zudem ein einfaches Recycling aber auch eine Wiederverwendung der Komponenten des Zellstacks 5 möglich.

Um mögliche, unbeabsichtigte elektrische Kurzschlüsse durch aneinander liegende Zellstacks 5 zu vermeiden, können die elektrischen Anschlüsse 11 in den Endplatten 60,61, wie in Fig. 3 angedeutet, versenkt ausgeführt sein.

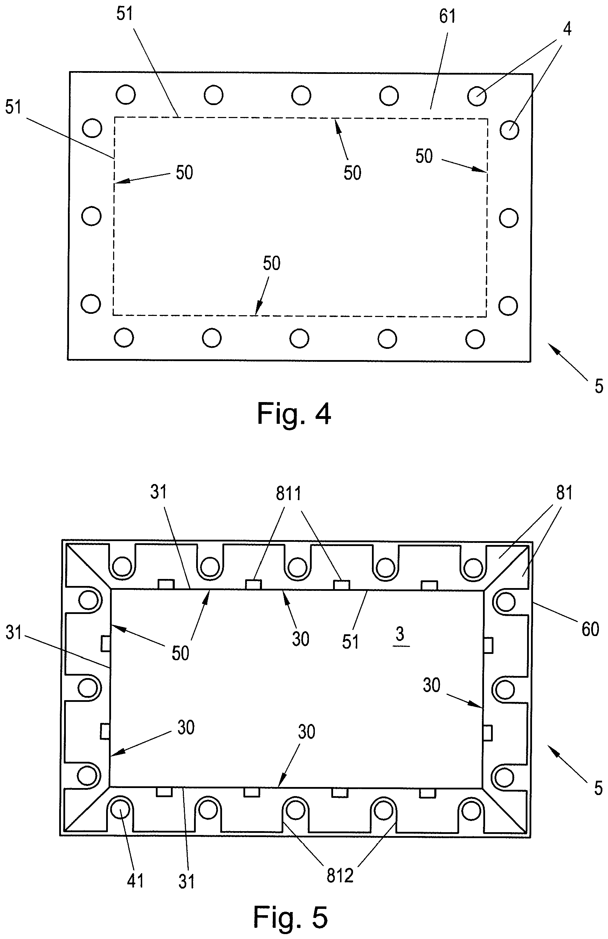

In Fig.4 ist eine Draufsicht auf den erfindungsgemäßen Zellstack 5 ersichtlich. Der Zellstack 5 weist eine Anzahl an äußeren Stackseiten 50 auf. In diesem Beispiel sind vier Stackseiten 50 vorhanden. Strichliert dargestellt sind die darunter liegenden Stackrahmen 3.

Fig.5 zeigt einen Schnitt durch den erfindungsgemäßen Zellstack 5, entlang einer Ebene parallel zur Stirnfläche eines Stackrahmens 3. Mittig ist ein Stackrahmen 3 ersichtlich, Elektrodenplatten 22, semipermeable Membran 21, Elektroden 23, usw. sind aus Übersichtsgründen nicht eingezeichnet.

Um den Stackrahmen 3 herum sind vorzugsweise an jeder Stackseite 50, zumindest aber an einer Stackseite 50, starre Abstandhalter 81 angeordnet. Die Abstandhalter 81 sind wiederum zwischen den Endplatten 60,61 geklemmt, um einen konstanten Abstand dazwischen zu gewährleisten.

Diese Abstandshalter 81 liegen dabei erfindungsgemäß auf jeder Stackseite 50, an der der Abstandshalter 81 vorgesehen ist, an mindestens 75%, vorzugsweise mindestens 90%, der Stackseitenfläche 51 ebendieser Stackseite 50 bündig an. Die Stackseitenfläche 51 wird dabei durch die Summe der Rahmenseitenflächen 31 der Rahmenseiten 30 der Stackrahmen 3 an dieser Stackseite 50 gebildet. Vorteilhafterweise liegen die Abstandshalter 81 aber auch an jeder Rahmenseite 30 jedes Stackrahmens 3 zu mindestens 75%, vorzugsweise 90%, bündig an. Damit wird eine ausreichende Anliegefläche für die Stackseitenflächen 51 bzw. die Rahmenseitenflächen 31 geschaffen, um eine zu große Verformung der Stackrahmen 3 im Zellstack 5 zu verhindern.

Eine vorteilhafte Ausgestaltung sieht vor, dass die Berührungspunkte von Stackrahmen 3 und des zumindest einen Abstandshalters 81 in Umfangsrichtung der Stackrahmen 3 durchgehend maximal für 100 mm, vorzugsweise 10 mm, unterbrochen sind. Auf Unterbrechungen in der Berührung zwischen einem Abstandshalter 81 und einer Stackseitenfläche 51 bzw. einer Rahmenseitenfläche 31, größer als 100 mm wird vorteilhafterweise verzichtet, um ein Quellen bzw. Kriechen des Zellstacks 5 in oder durch diese Unterbrechungen zu verhindern. Bei einer Unterbrechung der Berührungsfläche von Rahmenseitenfläche 31 und Abstandshalter 81 kleiner 100 mm in Umfangsrichtung können insbesondere thermische Ausdehnungseffekte von Abstandshalter 18 und Endplatten 60,61 berücksichtigt werden ohne ein Quellen bzw. Kriechen des Zellstacks 5 zu begünstigen.

Eine weitere vorteilhafte Ausgestaltung sieht vor, dass die Berührungspunkte von Stackrahmen 3 und dem zumindest einen Abstandshalter 81 auf einer Stackseite 50 in Umfangsrichtung der Stackrahmen 3 maximal für 75%, vorzugsweise 90% der Seitenlänge der Stackseite 50 des Stackrahmens unterbrochen sind.

Vorteilhafterweise sind zumindest zwei Abstandshalter 81 vorgesehen und weisen in Umfangsrichtung der Stackrahmen 3 einen dazwischenliegenden Spalt einer Breite von maximal 2 mm, vorzugsweise 1 mm auf. In Fig. 5 sind beispielsweise vier Stackrahmen 3 vorgesehen, womit an jeder Ecke ein Spalt zwischen den in Umfangsrichtung nebeneinander angeordneten Abstandshaltern 81 vorgesehen sein könnte.

In einer besonders vorteilhaften Ausgestaltung, wie sie auch in Fig. 5 dargestellt ist, liegen die Abstandshalter 81 an jeder Rahmenseite 30 jedes Stackrahmens 3, und damit auch an jeder Stackseitenfläche 51, zu 100% bündig an, weil damit jegliche Verformung der Stackrahmens 3 nach außen unterbunden werden kann.

Die Übergänge von Abstandshalter 81 zu Abstandshalter 81 in Umfangsrichtung können, wie in Fig. 5 dargestellt, abgeschrägt erfolgen (mit oder ohne Spalt dazwischen), können jedoch auch beispielsweise überlappend (mit oder ohne Spalt dazwischen) ausgestaltet sein.

Um den Abstand der Endplatten 60, 61 bestmöglich einzustellen, ist es vorteilhaft zumindest einen Abstandshalter 81 pro Stackseite 50 vorzusehen. Es kann natürlich auch ein Abstandshalter 81 vorgesehen sein, der mehrere Stackseiten 50 bedeckt, der also zumindest um eine Ecke des Zellstacks 5 herumreicht. Das kann den Zusammenbau des Zellstacks 5 erleichtern.

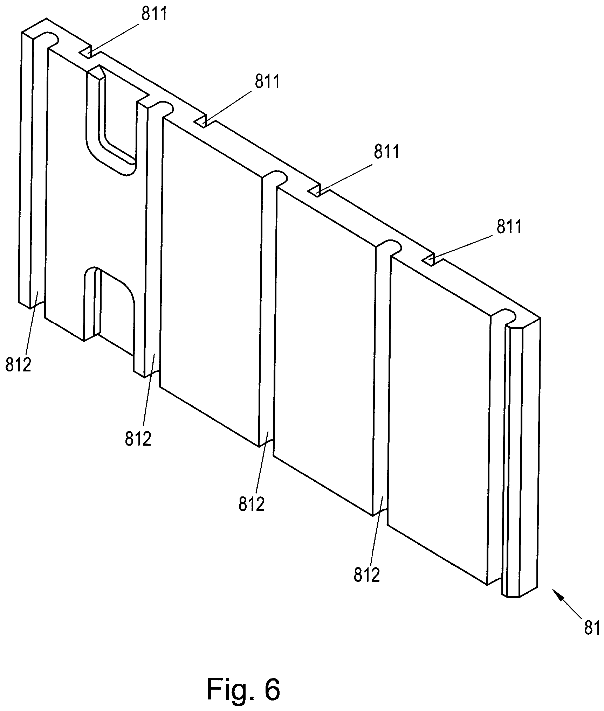

Wie in Fig. 6 dargestellt, können die Abstandshalter 81 auf der dem Zellstack 5 zugewandten Seite Entspannungsausnehmungen 811 aufweisen, die vorteilhafterweise von einer Endplatte 60,61 zur anderen Endplatte 60,61 reichen. Damit können Deformationen der Abstandshalter 81 vor dem Zusammenbau des Zellstacks 5 gering gehalten werden, da Verspannungen innerhalb der Abstandshalter 81 verhindert werden. Zudem wird beim Zusammenbau des Zellstacks 5 die Reibung zu den Stackrahmen 3 verringert. Die Abstandshalter 81, wie auch die Endplatten 60,61 können an den nach außen gewandten Oberflächen weitere Ausnehmungen, Löcher, oder Erhöhungen, z.B. Haltegriffe, aufweisen, die einen leichteren Transport bzw. eine leichtere Montage des Zellstacks 5 ermöglichen, oder auch um eine Befestigung oder eine Führung von Kabeln oder Kabelbündeln zu ermöglichen, sowie Stromabnehmern, aufweisen wie in Fig.3 angedeutet. Auch kann die nach außen gerichtete Oberfläche der Abstandshalter 81, wie in Fig.3 angedeutet, strebenförmig ausgebildet sein, z.B. ein Wellenmuster aufweisen, um eine hohe physische Stabilität bei akzeptabler Masse zu ermöglichen. Um die thermische Ausdehnung zwischen dem zumindest einen Abstandshalter 81 und den Stackrahmen 3 gering zu halten, kann der zumindest eine Abstandshalter 81 einen thermischen Ausdehnungskoeffizienten im Bereich von 80 bis 120% eines thermischen Ausdehnungskoeffizienten der Stackrahmen aufweisen. Typischerweise werden Materialien verwendet, die thermische Ausdehnungskoeffizienten aufweisen, welche eine Längenänderung um 100 ppm/°C verursachen,

## Patentansprüche

1. Zellstack (5) einer Redox-Durchflussbatterie (1) mit einer ersten Endplatte (60) und einer zweiten Endplatte (61), wobei der Zellstack (5) eine Anzahl an Stackseiten (50) aufweist und zwischen der ersten Endplatte (60) und der zweiten Endplatte (61) eine Mehrzahl von Zellen (2) angeordnet sind, wobei die Zellen (2) jeweils zwei elastomere Stackrahmen (3) mit einer Anzahl an Rahmenseitenflächen (31) an einer Anzahl an Rahmenseiten (30), die gemeinsam jeweils eine Umfangsfläche eines Stackrahmens (3) bilden, aufweisen, wobei Spannmitteln (4) vorhanden sind, die die erste Endplatte (60) und die zweite Endplatte (61) zusammendrücken und zwischen der ersten Endplatte (60) und zweiten Endplatte (61) zumindest ein Abstandshalter (8) angeordnet ist, um einen Abstand (8') zwischen der ersten Endplatte (60) und der zweiten Endplatte (61) einzustellen, **dadurch gekennzeichnet, dass** der zumindest eine Abstandshalter (81) auf zumindest einer Stackseite (50) an mindestens 75%, vorzugsweise mindestens 90%, der Stackseitenflächen (51) dieser zumindest einen Stackseite (50) bündig anliegt.

2. Zellstack nach Anspruch 1, **dadurch gekennzeichnet, dass** der zumindest eine Abstandshalter (81) an jeder Rahmenseitenfläche (31) jedes Stackrahmens (3) zu mindestens 75%, vorzugsweise mindestens 90%, bündig anliegt.

3. Zellstack nach Anspruch 1 oder 2, **dadurch gekennzeichnet, dass** die Berührungspunkte von Stackrahmen (3) und des zumindest einen Abstandshalter (81) in Umfangsrichtung der Stackrahmen (3) maximal für 100 mm, vorzugsweise maximal für 10 mm, durchgehend unterbrochen sind.

4. Zellstack nach einem der Ansprüche 1 bis 3, **dadurch gekennzeichnet, dass** die Berührungspunkte von Stackrahmen (3) und dem zumindest einen Abstandshalter (81) auf einer Stackseite (50) in Umfangsrichtung der Stackrahmen (3) maximal für 75%, vorzugsweise 90%, der Seitenlänge der Stackseite (50) des Stackrahmens (3) unterbrochen sind.

5. Zellstack nach einem der Ansprüche 1 bis 4, **dadurch gekennzeichnet, dass** zumindest zwei Abstandshalter (81) vorgesehen sind und zwischen den zumindest zwei Abstandshalter (81) in Umfangsrichtung der Stackrahmen (3) ein Spalt einer Breite von maximal 2 mm, vorzugsweise 1 mm, vorgesehen ist.

6. Zellstack nach einem der Ansprüche 1 bis 5, **dadurch gekennzeichnet, dass** der zumindest eine Abstandshalter (81) an jeder Rahmenseite (30) jedes Stackrahmens (3) zu 100% bündig anliegt.

7. Zellstack nach einem der Ansprüche 1 bis 6, **dadurch gekennzeichnet, dass** zumindest ein Abstandshalter (81) pro Stackseite (50) vorgesehen ist.

8. Zellstack nach einem der Ansprüche 1 bis 7, **dadurch gekennzeichnet, dass** der zumindest eine Abstandshalter (81) einen thermischen Ausdehnungskoeffizienten im Bereich von 80 bis 120% eines thermischen Ausdehnungskoeffizienten des Stackrahmen (3) aufweist.

## Claims

1. Cell stack (5) of a redox flow battery (1) having a first end plate (60) and a second end plate (61), the cell stack (5) having a number of stack sides (50) and a plurality of cells (2) being arranged between the first end plate (60) and the second end plate (61), the cells (2) each comprising two elastomeric stack frames (3) having a number of frame side surfaces (31) on a number of frame sides (30) which together form a peripheral surface of a stack frame (3) in each case, clamping means (4) being provided which press the first end plate (60) and the second end plate (61) together, and at least one spacer (8) being arranged between the first end plate (60) and the second end plate (61) so as to adjust a distance (8') between the first end plate (60) and the second end plate (61), **characterized in that** the at least one spacer (81) on at least one stack side (50) rests so as to be flush against at least 75%, preferably at least 90%, of the stack side surfaces (51) of the at least one stack side (50).

2. Cell stack according to claim 1, **characterized in that** the at least one spacer (81) rests against each frame side surface (31) of each stack frame (3) so as to be flush by at least 75%, preferably at least 90%.

3. Cell stack according to either claim 1 or claim 2, **characterized in that** the points of contact of stack frames (3) and the at least one spacer (81) in the peripheral direction of the stack frames (3) are continuously interrupted for a maximum of 100 mm, preferably a maximum of 10 mm.

4. Cell stack according to any of claims 1 to 3, **characterized in that** the points of contact of stack frames (3) and the at least one spacer (81) on a stack side (50) in the peripheral direction of the stack frames (3) are interrupted for a maximum of 75%, preferably 90%, of the side length of the stack side (50) of the stack frame (3).

5. Cell stack according to any of claims 1 to 4, **characterized in that** at least two spacers (81) are provided and a gap having a width of a maximum of 2 mm, preferably 1 mm, is provided between the at least two spacers (81) in the peripheral direction of the stack frames (3).

6. Cell stack according to any of claims 1 to 5, **characterized in that** the at least one spacer (81) rests so as to be 100% flush against each frame side (30) of each stack frame (3).

7. Cell stack according to any of claims 1 to 6, **characterized in that** at least one spacer (81) is provided per stack side (50).

8. Cell stack according to any of claims 1 to 7, **characterized in that** the at least one spacer (81) has a thermal expansion coefficient in the range of 80 to 120% of a thermal expansion coefficient of the stack frame (3).

## Revendications

1. Pile de cellules (5) d'une batterie à flux redox (1), comportant une première plaque d'extrémité (60) et une seconde plaque d'extrémité (61), la pile de cellules (5) comportant un certain nombre de faces de pile (50), et une pluralité de cellules (2) étant disposée entre la première plaque d'extrémité (60) et la seconde plaque d'extrémité (61), les cellules (2) comportant chacune deux cadres de pile (3) élastomères comportant un certain nombre de surfaces latérales de cadre (31) sur un certain nombre de faces de cadre (30) qui forment ensemble une surface circonférentielle d'un cadre de pile (3), des moyens de serrage (4) étant prévus, lesquels moyens de serrage compriment la première plaque d'extrémité (60) et la seconde plaque d'extrémité (61), et au moins un écarteur (8) étant disposé entre la première plaque d'extrémité (60) et la seconde plaque d'extrémité (61) afin d'établir une distance (8') entre la première plaque d'extrémité (60) et la seconde plaque d'extrémité (61), **caractérisée en ce que** l'au moins un écarteur (81) sur au moins une face de pile (50) repose à fleur sur au moins 75 %, de préférence au moins 90 % des faces latérales de pile (51) de cette au moins une face de pile (50).

2. Pile de cellules selon la revendication 1, **caractérisée en ce que** l'au moins un écarteur (81) repose à fleur à au moins 75 %, de préférence à au moins 90 % sur chaque face latérale de cadre (31) de chaque cadre de pile (3),.

3. Pile de cellules selon la revendication 1 ou 2, **caractérisé en ce que** les points de contact des cadres de pile (3) et de l'au moins un écarteur (81) sont interrompus en continu sur un maximum de 100 mm, de préférence sur un maximum de 10 mm dans la direction circonférentielle du cadre de pile (3).

4. Pile de cellules selon l'une des revendications 1 à 3, **caractérisée en ce que** les points de contact du cadre de pile (3) et de l'au moins un écarteur (81) sur une face de pile (50) sont interrompus en continu sur un maximum de 75 %, de préférence de 90 % de la longueur latérale de la face de pile (50) du cadre de pile (3) dans la direction circonférentielle du cadre de pile (3).

5. Pile de cellules selon l'une des revendications 1 à 4, **caractérisée en ce qu'**au moins deux écarteurs (81) sont prévus, et **en ce qu'**une fente d'une largeur d'au plus 2 mm, de préférence de 1 mm est prévue entre les au moins deux écarteurs (81) dans la direction circonférentielle du cadre de pile (3).

6. Pile de cellules selon l'une des revendications 1 à 5, **caractérisée en ce que** l'au moins un écarteur (81) repose à fleur à 100 % sur chaque face de cadre (30) de chaque cadre de pile (3).

7. Pile de cellules selon l'une des revendications 1 à 6, **caractérisé en ce qu'**au moins un écarteur (81) est prévu par face de pile (50).

8. Pile de cellules selon l'une des revendications 1 à 7, **caractérisé en ce que** l'au moins un écarteur (81) présente un coefficient de dilatation thermique compris entre 80 et 120 % d'un coefficient de dilatation thermique du cadre de pile (3).
